Europäisches Patentamt

European Patent Office

Office européen des brevets

(19)

(11) Publication number: **0 101 105**
**B1**

(12) # EUROPEAN PATENT SPECIFICATION

(45) Date of publication of patent specification: **15.10.86**

(51) Int. Cl.⁴: **A 23 D 3/00, A 23 D 3/02**

(21) Application number: **83200992.2**

(22) Date of filing: **04.07.83**

(54) **Edible emulsion having an improved microbiological stability.**

(30) Priority: **08.07.82 GB 8219846**
**18.10.82 NL 8204008**

(43) Date of publication of application:
**22.02.84 Bulletin 84/08**

(45) Publication of the grant of the patent:
**15.10.86 Bulletin 86/42**

(84) Designated Contracting States:
**AT BE CH DE FR GB IT LI NL SE**

(56) References cited:
**FR-A-2 303 072**
**FR-A-2 415 429**

**A.J.C. ANDERSEN et al.: "Margarine", 2nd
edition, 1965, pages 118-125, 171, Pergamon
Press, London, G.B.**

(73) Proprietor: **UNILEVER NV**
**Burgemeester s'Jacobplein 1 P.O. Box 760
NL-3000 DK Rotterdam (NL)**
(84) **BE CH DE FR IT LI NL SE AT**

(73) Proprietor: **UNILEVER PLC**
**Unilever House Blackfriars P.O. Box 68
London EC4P 4BQ (GB)**
(84) **GB**

(72) Inventor: **Gould, Graham**
**17 Dove Road**
**Bedford, Beds. (GB)**
Inventor: **Crossley, Anthony**
**"St. Albans" 509 Broadway**
**Letchworth, Herts. (GB)**
Inventor: **Moran, David Patrick Joseph**
**Jubilee Lodge Keyston Road**
**Covington Huntingdon (GB)**

(74) Representative: **Léon, Alain Elie, Dr. et al
Unilever N.V. Patent Division P.O. Box 137
NL-3130 AC Vlaardingen (NL)**

Courier Press, Leamington Spa, England.

## Description

The present invention relates to an edible emulsion, particularly a water-in-oil emulsion-spread with a reduced fat content which displays an improved shelf stability.

By reduced fat content is understood a level of fat lower than about 85%, and preferably ranging from 30 to 65% by weight.

Water-containing spreads have a limited shelf stability unless specific measures are taken, such as adding water-activity depressing agents, acids, preservatives or gelling agents. Adding said ingredients has, however, disadvantages. Some of them affect the organoleptic properties of the product when the concentration is too high, others increase too much the cost price of the product and last, but not least, the use of some ingredients is subject to legal restrictions.

There is need of a spread having an improved shelf stability and good organoleptic properties.

According to the present invention an edible emulsion is provided comprising at least two differently formulated aqueous phases containing microbiologically labile additives and ingredients inhibiting bacterial growth which are compatible with said additives, said aqueous phases being present in the form of discrete, differently formulated drops dispersed in a continuous phase, wherein an effective amount of each ingredient inhibiting bacterial growth is concentrated along with an additive in part of the dispersed aqueous drops and none of the additives is present unprotected.

Edible, oil- and water-containing emulsions containing microbiologically labile additives such as carbohydrates and proteins, along with acid and salt are described in FR—A—2 303 072. In said emulsions the acid and the salt are homogeneously distributed in the whole aqueous phase. As distinct therefrom, acid is present concentrated in part of the aqueous phase and salt is present concentrated in the remainder of the aqueous phase of the emulsion according to the invention, resulting in an improved microbiological stability.

The present invention particularly relates to water-in-oil emulsion-spreads wherein the differently formulated aqueous phases are dispersed in a continuous plastic fat phase, i.e. a fat phase which contains sufficient crystallized fat at ambient temperature to obtain a spread which can be packed in a tub or in a wrapper. Said continuous fat phase preferably constitutes 30—65% by weight of the total emulsion. Below 30 wt.% of fat the level of aqueous phase will be relatively high and microbiological stabilisation difficult to achieve. In spreads with a level of fat above 65 wt.% the principle of the present invention can perfectly be applied but is less relevant, since microbiological stability is less of a problem and it can be achieved by simpler means.

In the case where intermingling and coalescence of the differently formulated drops of aqueous phases constitute a problem after a long period of storage or during transport, it is important that the emulsion contains an ingredient, for instance an emulsifier, preventing intermingling and coalescence of the drops.

This can be achieved by electrostatic repulsion, or by a component imparting steric hindrance thereby preventing dispersed drops from colliding and coalescing or by applying specific processing conditions as illustrated further in the specification. A particularly useful class of emulsifiers in that respect are the polyglycerol fatty acid esters.

The microbiologically labile additives in the emulsions according to the invention may comprise proteins such as milk proteins or vegetable proteins, carbohydrates such as glucose, lactose or products obtained by partially hydrolysing starch.

Ingredients inhibiting bacterial growth may consist of acids such as hydrochloric acid, acetic acid, lactic acid, phosphoric acid; preservatives such as benzoic acid, sorbic acid; water-activity depressing agents such as salts e.g. sodium chloride, alkali metal phosphates or any substance increasing the osmotic pressure.

According to a specific embodiment of the present invention one aqueous phase is present in the form of discrete drops (i) containing a salt and an additive and another aqueous phase is present in the form of discrete drops (ii) containing an acid and an additive.

The preferred salt is sodium chloride and its preferred concentration is 6—12 wt.% (based on aqueous phase (i)). The acid present in drops (ii) is present in a concentration sufficient to achieve a pH ranging from 1.5 to 5.5, preferably from 2.0 to 4.7.

Additives are preferably put together with compatible ingredients inhibiting bacterial growth, i.e. ingredients which do not substantially affect the physical or chemical nature of the additives or, put in other words, ingredients which do not cause degradation of the additives.

According to an embodiment of the present invention a protein is present as one of the additives in drops (i), i.e. the drops containing salt and no acid, in order to avoid possible denaturation of the protein.

However, in the case where whey protein is used, a lower pH is also acceptable, e.g. a pH between 3.0 and 4.7.

Water-soluble or -dispersible components, particularly additives of the emulsion, are concentrated in a proportion of the total amount of the aqueous phase, e.g. 5—75% of the total amount of the aqueous phase, whereby especially at the lower end of the range the concentration of solutes could be such that no additional specific bacterial growth-inhibiting agents are required because of the prevailing low water-activity.

It is also possible that the spread comprises further drops (iii) of a third aqueous phase which is substantially free from additives and ingredients inhibiting bacterial growth, and may consist of pure water.

The proportion of each of the various aqueous phases can vary within a wide range, e.g. from 5—75%. It is, however, preferable to select proportions allowing the presence of a relatively high concentration of the water-activity depressing agent, e.g. the salt, or of the acid in that part of the aqueous phase where it is most required, while maintaining its overall concentration in the total emulsion within the range dictated by organoleptic considerations.

The present invention also provides a process for producing emulsions as defined hereinbefore, comprising: dispersing in a continuous phase at least two differently formulated aqueous phases containing microbiologically labile additives and ingredients inhibiting bacterial growth, in the form of discrete, differently formulated drops, while ensuring that an effective amount of each ingredient inhibiting bacterial growth is concentrated along with an additive in part of the dispersed aqueous drops and that none of the additives is present unprotected. The protection conferred on the additives can be attributable to the addition of any of the ingredients inhibiting growth described above or to a high degree of dispersion i.e. a droplet size of less than 5 microns and preferably less than 2 microns.

A preferred way of producing spreads according to the invention involves: (a) producing at least two separate, differently formulated aqueous phases wherein in each of said phases an additive and an ingredient inhibiting bacterial growth are concentrated; (b) dispersing each of said aqueous phases in a platic fat phase to obtain at least two separate emulsions, (c) separately cooling and texturising said emulsions, preferably in a Votator apparatus; and (d) mixing the texturised emulsions applying a mild shear regime, preferably in a static mixer, to prevent intermingling of the various differently formulated aqueous phase drops.

Each of the aqueous phases may contain one or more additives and one or more ingredients inhibiting bacterial growth, which are compatible with the additives.

According to a preferred method of performing the process according to the invention a further step (e) is included, involving recirculating each of the emulsions obtained in step (c) into separate containers, prior to intermixing the emulsions in step (d).

It is also possible to carry out a process comprising a further recirculation step (f) involving recirculation as a single phase of at least one of the aqueous phases into separate containers prior to emulsification and intermixing.

This procedure is particularly useful when the aqueous phase consists of a cream which cannot tolerate overworking, which may occur in the case where recirculation has to be carried out, e.g. when the packaging machine breaks down.

The emulsions as hereinbefore described, which are obtainable according to a process as described above, display an improved microbiological stability in comparison with emulsions wherein the bacterial growth-inhibiting ingredients are homogenously distributed in one single aqueous phase dispersed in the continuous phase. Put in other words: an improved shelf stability is achieved according to the invention at overall levels of the bacterial growth inhibiting ingredients which are equal to or even smaller than the normal levels of the same ingredients.

The invention will now be illustrated in the following example.

Example

A fat spread (40% fat) was produced from two aqueous phases.

The first aqueous phase (25 wt.% of the total amount of the aqueous phases) contained 3.3% of whey protein, 8.0% of sodium chloride and 10.7% of $Na_2HPO_4$ and had a pH of 7.0. (All proportions are based on the weight of this aqueous phase.)

The second aqueous phase (75% of the total amount of the aqueous phase) contained 3.0% of 1M hydrochloric acid, 0.2% of citric acid, 0.02% of potassium sorbate and 3.3% of whey protein. The pH was 3.0. (All proportions are based on the weight of this aqueous phase.)

The first aqueous phase was emulsified in a margarine fat blend consisting of 23% of palm oil hydrogenated to m.p. = 43°C, 77% of soybean oil and 2% of an emulsifier consisting of a polyglycerol ester (Homodan PT).

The second aqueous phase was emulsified separately in the same blend.

Both emulsions were separately cooled and texturised in a Votator apparatus.

The texturised emulsions were combined by gently mixing in a static mixer to obtain the final spread (pH 6.1).

Experimental samples in an accelerated spoilage test were inocculated with about $10^3$ organisms/g, stored at 10°C and compared with control samples produced starting from the same proportions of the additives and ingredients inhibiting bacterial growth as outlined above, which were homogeneously distributed over the whole emulsion instead of being concentrated in separate, differently formulated drops. The resulting pH was 6.1.

The control samples had a count of organisms 1000 times greater than the samples according to the invention following storage.

**Claims**

1. An edible emulsion comprising at least two differently formulated aqueous phases containing microbiologically labile additives and ingredients inhibiting bacterial growth which are compatible with said additives, said aqueous phases being present in the form of discrete, differently formulated drops dispersed in a continuous plastic fat phase, wherein an effective amount of each ingredient inhibiting bacterial growth is concentrated along with an additive in part of the dispersed aqueous drops and none of the additives is present unprotected.

2. An edible emulsion according to claim 2, wherein the fat phase constitutes 30—65 wt.% of the total emulsion.

3. An edible emulsion according to claim 1, wherein the emulsion contains an emulsifier preventing intermingling and coalescence of the differently formulated drops.

4. An edible emulsion according to claim 4, wherein the emulsifier comprises a polyglycerol fatty acid ester.

5. An edible emulsion according to claim 1, wherein the ingredient inhibiting bacterial growth consists of a water-activity depressing agent, an acid or a preservative.

6. An edible emulsion according to claim 1, wherein one aqueous phase is present in the form of dispersed discrete drops (i) containing a salt and an additive, and another aqueous phase is present in the form of dispersed, discrete drops (ii) containing an acid and an additive.

7. An edible emulsion according to claim 7, wherein drops (i) contain 6—12% of sodium chloride and an additive, and drops (ii) contain a sufficient amount of an acid to achieve a pH ranging from 1.5 to 5.5, and an additive.

8. An edible emulsion according to claim 7 or 8, wherein the additive present in drops (i) is a protein.

9. An edible emulsion according to claim 1, wherein each ingredient inhibiting bacterial growth is concentrated along with an additive in a proportion of the total aqueous phase ranging from 5 to 75 wt.%.

10. An edible emulsion according to claim 1, wherein part of the aqueous phase does not contain any additive.

11. A process for producing an edible emulsion according to claim 11, comprising: dispersing in a continuous fat phase at least two differently formulated aqueous phases containing microbiologically labile additives and ingredients inhibiting bacterial growth, in the form of discrete, differently formulated drops, while ensuring that an effective amount of each ingredient inhibiting bacterial growth is concentrated along with an additive in part of the dispersed aqueous drops and that none of the additives is present unprotected.

12. A process according to claim 12, wherein the differently formulated aqueous phases are dispersed in a continuous plastic fat phase.

13. A process according to claim 13, wherein the fat phase constitutes 30—65 wt.% of the total emulsion.

14. A process according to claim 12, wherein an emulsifier preventing intermingling and coalescence of the differently formulated drops is incorporated in the emulsion.

15. A process according to claim 12, wherein the emulsifier comprises a polyglycerol fatty acid ester.

16. A process according to claim 12, wherein the ingredient inhibiting bacterial growth consists of a water-activity depressing agent, an acid or a preservative.

17. A process according to claim 12, wherein one aqueous phase is dispersed as discrete drops (i) containing a salt and an additive and another aqueous phase is dispersed as discrete drops (ii) containing an acid and an additive.

18. A process according to claim 18, wherein drops (i) contain 6—12% of sodium chloride and an additive and drops (ii) contain a sufficient amount of an acid to achieve a pH ranging from 1.5 to 5.5, and an additive.

19. A process according to claim 18 or 19, wherein a protein is incorporated in drops (i).

20. A process according to claim 12, wherein each ingredient inhibiting bacterial growth is concentrated along with an additive in a proportion of the total aqueous phase ranging from 5 to 75 wt.%.

21. A process according to claim 12, comprising: (a) producing at least two separate emulsions by separately dispersing each of said differently formulated aqueous phases in a plastic fatty phase; (b) separately cooling and texturising said emulsions; (c) mixing the texturised emulsions by applying a mild shear regime preventing coalescence and intermixing of the differently formulated, dispersed aqueous phases.

22. A process according to claim 22, wherein step (b) is carried out in a Votator apparatus.

23. A process according to claim 22, wherein step (c) is carried out in a static mixer.

24. A process according to claim 12, further comprising a recirculation step (d) involving recirculating each of the emulsions obtained in step (b) into their respective containers, prior to intermixing the emulsions in step (c).

25. A process according to claim 12, further comprising a recirculation step (e) involving recirculating as a single stream at least one of the aqueous phases into a separate container prior to emulsification and intermixing.

**Patentansprüche**

1. Genießbare Emulsion mit einem Gehalt an mindestens zwei unterschiedlich zubereiteten wäßrigen Phasen, die mikrobilogisch empfindliche Additive und mit den Additiven kompatible, das Bakterienwachstum inhibierende Bestandteile enthalten, wobei die wäßrigen Phasen in Form diskreter, unterschiedlich zubereiteter Tropfen vorliegen, die in einer kontinuierlichen plastischen Fettphase dispergiert sind, dadurch gekennzeichnet, daß eine wirksame Menge eines jeden das Bakterienwachstum inhibierenden Bestandteils zusammen mit einem Additiv in einem Teil der dispergierten wäßrigen Tropfen konzentriert ist und keines der Additive ungeschützt vorliegt.

2. Genießbare Emulsion nach Anspruch 1, dadurch gekennzeichnet, daß die Fettphase 30—65 Gew.% der gasamten Emulsion ausmacht.

3. Genießbare Emulsion nach Anspruch 1, dadurch gekennzeichnet, daß die Emulsion einen Emulgator enthält, der das Durchsetzen und Zusammenfließen der unterschiedlich zubereiteten Tropfen verhindert.

4. Genießbare Emulsion nach Anspruch 3, dadurch gekennzeichnet, daß der Emulgator einen Polyglycerinfettsäureester enthält.

5. Genießbare Emulsion nach Anspruch 1, dadurch gekennzeichnet, daß der das Bakterienwachstum inhibierende Bestandteil aus einem die Wasseraktivität herabsetzenden Mittel, einer Säure oder einem Konservierungsmittel besteht.

6. Genießbare Emulsion nach Anspruch 1, dadurch gekennzeichnet, daß eine wäßrige Phase in Form dispergierter, diskreter Tropfen (I), die ein Salz und ein Additiv enthält, une eine andere wäßrige Phase in Form dispergierter, diskreter Tropfen (II), die eine Säure und eine Additiv enthält, vorliegt.

7. Genießbare Emulsion nach Anspruch 6, dadurch gekennzeichnet, daß die Tropfen (I) 6—12% Natriumchlorid und ein Additiv und die Tropfen (II) eine ausreichende Menge einer Säure zur Einstellung eines pH-Bereiches von 1,5 bis 5,5 und ein Additiv enthalten.

8. Genießbare Emulsion nach Anspruch 6 oder 7, dadurch gekennzeichnet, daß das in den Tropfen (I) vorliegende Additiv ein Protein ist.

9. Genießbare Emulsion nach Anspruch 1, dadurch gekennzeichnet, daß jeder das Bakterienwachstum inhibierende Bestandteil zusammen mit einem Additiv in einem zwischen 5 und 75 Gew.% liegenden Anteil der gesamten wäßrigen Phase konzentriert ist.

10. Genießbare Emulsion nach Anspruch 1, dadurch gekennzeichnet, daß ein Teil der wäßrigen Phase kein Additiv enthält.

11. Verfahren zur Herstellung einer genießbaren Emulsion nach Anspruch 10, dadurch gekennzeichnet, daß mindestens zwei unterschiedlich zubereitete wäßrige Phasen, die mikrobiologisch empfindliche Additive und das Bakterienwachstum inhibierende Bestandteile enthalten, in Form diskreter, unterschiedlich zubereiteter Tropfen in einer kontinuierlichen Fettphase dispergiert werden, wobei sichergestellt wird, daß eine wirksame Menge eines jeden das Bakterienwachstum inhibierenden Bestandteiles zusammen mit einem Additiv in einem Teil der dispergierten wäßrigen Tropfen konzentriert wird und keines der Additive ungeschützt vorliegt.

12. Verfahren nach Anspruch 11, dadurch gekennzeichnet, daß die unterschiedlich zubereiteten wäßrigen Phasen in einer kontinuierlichen plastischen Fettphase dispergiert werden.

13. Verfahren nach Anspruch 12, dadurch gekennzeichnet, daß die Fettphase 30—65 Gew.% der gesamten Emulsion ausmacht.

14. Verfahren nach Anspruch 11, dadurch gekennzeichnet, daß ein das Durchsetzen und Zusammenfließen der unterschiedlich zubereiteten Tropfen verhindernder Emulgator in die Emulsion eingearbeitet wird.

15. Verfahren nach Anspruch 11, dadurch gekennzeichnet, daß der Emulgator einen Polyglycerinfettsäureester enthält.

16. Verfahren nach Anspruch 11, dadurch gekennzeichnet, daß der das Bakterienwachstum inhibierende Bestandteil aus einem die Wasseraktivität herabsetzenden Mittel, einer Säure oder einem Konservierungsmittel besteht.

17. Verfahren nach Anspruch 11, dadurch gekennzeichnet, daß eine wäßrige Phase als diskrete Tropfen (I), die ein Salz und ein Additiv enthalten, und eine andere wäßrige Phase als diskrete Tropfen (II). die eine Säure und ein Additiv enthalten, dispergiert werden.

18. Verfahren nach Anspruch 17, dadurch gekennzeichnet, daß die Tropfen (I) 6—12% Natriumchlorid und ein Additiv enthalten und die Tropfen (II) ein ausreichende Menge einer Säure zur Einstellung eines pH-Wertes von 1,5 bis 5,5 und ein Additiv enthalten.

19. Verfahren nach Anspruch 17 oder 18, dadurch gekennzeichnet, daß den Tropfen (I) ein Protein einverleibt wird.

20. Verfahren nach Anspruch 11, dadurch gekennzeichnet, daß jeder das Bakterienwachstum inhibierende Bestandteil zusammen mit einem Additiv in einem Anteil der gasamten wäßrigen Phase von 5 bis 75 Gew.% konzentriert wird.

21. Verfahren nach Anspruch 11, dadurch gekennzeichnet, daß (a) mindestens zwei separate Emulsionen durch gesondertes Dispergieren jeder der unterschiedlich zubereiteten wäßrigen Phase in einer plastischen Fettphase hergestellt werden, (b) die Emulsionen gesondert gekühlt und strukturell behandelt werden, (c) die strukturell behandelten Emulsionen durch Anwendung einer gelinden Scherbedingung gemischt werden, wodurch ein Einmengen und Zusammenfließen der unterschiedlich zubereiteten, dispergierten wäßrigen Phasen verhindert wird.

22. Verfahren nach Anspruch 21, dadurch gekennzeichnet, daß die Maßnahme (b) in einer Votator-Apparatur durchgeführt wird.

23. Verfahren nach Anspruch 21, dadurch gekennzeichnet, daß die Maßnahme (c) in einem statischen Mischer durchgeführt wird.

24. Verfahren nach Anspruch 11, dadurch gekenneichnet, daß des weiteren eine Rückführungsmaßnahme (d) durchgeführt wird, die das Rückführen jeder der bei der Maßnahme (b) erhaltenen Emulsionen in ihre jeweiligen Behälter, vor dem Einmischen der Emulsionen durch die maßnahme (c), einschließt.

25. Verfahren nach Anspruch 11, dadurch gekennzeichnet, daß des weiteren eine Rückführungsmaßnahme (e) durchgeführt wird, die das Rückführen eines einzelnen Stroms mindestens einer der wäßrigen Phasen in einen separaten Behälter vor dem Emulgieren und Einmischen umfaßt.

## Revendications

1. Emulsion comestible comprenant au moins deux phases aqueuses différemment formulées contenant des additifs microbiologiquement labiles et des ingrédients empêchant la croissance bactérienne qui sont compatibles avec lesdits additifs, lesdites phases aqueuses étant présentes sous forme de gouttes séparées différemment formulées en dispersion dans une phase grasse plastique continue, dans laquelle une proportion efficace de chaque ingrédient empêchant la croissance bactérienne est concentrée ensemble avec l'additif dans une partie des gouttes aqueuses dispersées et aucun des additifs n'est à l'état non protégé.

2. Emulsion comestible selon la revendication 1, dans laquelle la phase grasse constitue de 30 à 65% en poids de l'émulsion totale.

3. Emulison comestible selon la revendication 1, dans laquelle l'émulsion contient un émulsifiant pour empêcher le mélange et la coalescence des gouttes différemment formulées.

4. Emulsion comestible selon la revendication 3, dans laquelle l'émulsifiant comprend un ester d'acide gras de polyglycérol.

5. Emulsion comestible selon la revendication 1, dans laquelle l'ingrédient empêchant la croissance bactérienne est un agent abaissant l'activité de l'eau, un acide ou un conservateur.

6. Emulsion comestible selon la revendication 1, dans laquelle une phase aqueuse est présente sous forme de gouttes séparées dispersées (i) contenant un sel et un additif, et une autre phase aqueuse est présente sous forme de gouttes séparées dispersées (ii) contenant un acide et un additif.

7. Emulsion comestible selon la revendication 6, dans laquelle les gouttes (i) contiennent de 6 à 12% de chlorure de sodium et un additif et les gouttes (ii) contiennent une quantité suffisante d'un acide pour obtenir un pH compris entre 1,5 et 5,5, ete un additif.

8. Emulsion comestible selon la revendication 6 ou 7, dans laquelle l'additif présent dans les gouttes est une protéine.

9. Emulsion comestible selon la revendication 1, dans laquelle chaque ingrédient empêchant la croissance bactérienne est concentré ensemble avec un additif en une proportion de 5 à 75% en poids par rapport à la phase aqueuse totale.

10. Emulsion comestible selon la revendication 1, dans laquelle une partie de la phase aqueuse ne contient aucun additif.

11. Procédé de production d'une émulsion comestible selon la revendication 10, qui consiste: à disperser dans une phase grasse continue au moins deux phases aqueuses différemment formulées contenant des additifs microbiologiquement labiles et des ingrédients empêchant la croissance bactérienne, sous forme de gouttes séparées différemment formulées, tout en assurant qu'une porportion efficace de chaque ingrédient empêchant la croissance bactérienne soit concentrée ensemble avec l'additif dans une partie des gouttes aqueuses dispersées et qu'aucun des additifs ne soit dans un état non protégé.

12. Procédé selon la revendication 11, dans lequel les phases aqueuses différemment formulées sont dispersées dans une phase grasse plastique continue.

13. Procédé selon la revendication 12, dans lequel la phase grasse constitue de 30 à 65% du poids total de l'émulsion.

14. Procédé selon la revendication 11, dans lequel on incorpore dans l'émulsion un émulsifiant qui empêche le mélange et la coalescence des gouttes différemment formulées.

15. Procédé selon la revendication 11, dans lequel l'émulsifiant comprend un ester d'acide gras de polyglycérol.

16. Procédé selon la revendication 11, dans lequel l'ingrédient qui empêche la croissance bactérienne est un agent d'abaissement de l'activité de l'eau, un acide ou un conservateur.

17. Procédé selon la revendication 11, dans lequel une phase aqueuse est dispersée en gouttes séparées (i) contenant un sel et un additif et une autre phase aqueuse est dispersée en gouttes séparées (ii) contenant un acide ou un additif.

18. Procédé selon la revendication 17, dans lequel les gouttes (i) contiennent 6 à 12% de chlorure de sodium et un additif et les gouttes (ii) contiennent suffisamment d'un acide pour établir un pH de 1,5 à 5,5, et un additif.

19. Procédé selon la revendication 17 ou 18, dans lequel une protéine est incorporées dans les gouttes (i).

20. Procédé selon la revendication 11, dans lequel chaque ingrédient empêchant la croissance bactérienne est concentrée ensemble avec un additif en une proportion de 5 à 75% du poids de la phase aqueuse totale.

21. Procédé selon la revendication 11, qui consiste: (a) à produire au moins deux émulsions séparées en dispersant séparément chacune des phases aqueuses différemment formulées dans une phase grasse plastique; (b) à refroidir séparément et à texturiser lesdites émulsions; (c) à mélanger les émulsions texturisées par application d'un régime de cisaillement doux empêchant la coalescence et le mélange des phases aqueuses dispersées différemment formulées.

22. Procédé selon la revendication 21, selon lequel on effectue le stade (b) dans un appareil Votator.

23. Procédé selon la revendication 21, selon lequel on effectue le stade (c) dans un mélangeur statique.

24. Procédé selon la revendication 11, qui comprend en outre un stade de remise en circulation (d) consistant à remettre en circulation chacune des émulsions provenant du stade (b) dans leurs récipients respectifs avant le mélange des émulsions au stade (c).

25. Procédé selon la revendication 11, qui comprend en outre un stade de remise en circulation (e) consistant à remettre en circulation en un courant unique au moins l'une des phases aqueuses dans un récipient séparé avant l'émulsification et le mélange.